# EUROPEAN PATENT APPLICATION

(11) **EP 4 156 483 A1**
(43) Date of publication of application: **29.03.2023**
(21) Application number: 20943313.5
(22) Date of filing: 30.06.2020
(51) Int. Cl.: H02M 1/08

(54) **INVERTER, AND INVERSION SYSTEM AND METHOD**

(71) Applicant: Huawei Digital Power Technologies Co., Ltd., Shenzhen, Guangdong 518043 (CN)
(72) Inventor: GAO, Yongbing, Shenzhen, Guangdong 518129 (CN); CHEN, Dong, Shenzhen, Guangdong 518129 (CN); SHI, Lei, Shenzhen, Guangdong 518129 (CN)
(74) Representative: Gill Jennings & Every LLP
(86) International application number: PCT/CN2020/099176
(87) International publication number: WO 2022/000248

(57) **Abstract**

This application discloses an inverter, an inverter system, and a method. The inverter includes an inverter circuit and a controller. When at least one of the following preset conditions is met, the controller adjusts at least one of parameters including an operating frequency, an operating voltage, and an operating current of the inverter, to increase a loss of the inverter, where the at least one preset condition is as follows: An output power of the inverter circuit is lower than a preset power, an output current of the inverter circuit is lower than a preset current, an operating temperature of the inverter is lower than a preset temperature, or an operating humidity of the inverter is higher than a preset humidity. When any one of the foregoing conditions is met, the inverter may increase the operating temperature of the inverter or reduce the operating humidity of the inverter by increasing the loss of the inverter, thereby ensuring that the inverter can operate safely and reliably. In addition, no additional heating apparatus needs to be added, which not only reduces costs of the inverter, but also does not need to change an original structure design of the inverter.

## Description

### TECHNICAL FIELD

This application relates to the field of photovoltaic power generation technologies, and in particular, to an inverter, an inverter system, and a method.

### BACKGROUND

With aggravation of energy shortage and environmental pollution in modern society, photovoltaic power generation has attracted extensive attention as a renewable energy source. A photovoltaic power generation system can convert solar energy into electricity. The photovoltaic power generation system is greatly affected by an outdoor environment. For example, when an inverter in the photovoltaic power generation system operates in a low temperature environment, operating reliability of a component inside the inverter is reduced.

Currently, a heating apparatus is added inside the inverter, to ensure that the component inside the inverter is not affected by the low temperature environment. When the inverter operates in the low temperature environment, the heating apparatus starts to operate and generate heat to increase an operating temperature of the inverter, so as to ensure that the component inside the inverter is not affected by the low temperature environment, and improve operating reliability of the inverter.

However, adding the heating apparatus in the inverter increases costs of the inverter. In addition, heating effect of the heating apparatus is related to an installation position of the heating apparatus. The installation position of the heating apparatus needs to be considered when the heating apparatus is added inside the inverter, to ensure the heating effect of the heating apparatus. Consequently, an original structure design of the inverter is affected.

### SUMMARY

This application provides an inverter, an inverter system, and a method, which can increase a loss of the inverter without increasing costs of the inverter or changing an original structural design of the inverter, and ensure that the inverter can operate safely and reliably.

According to a first aspect, this application provides an inverter including an inverter circuit and a controller. The inverter circuit converts a direct current at an input terminal into an alternating current, and when at least one of an output power of the inverter circuit, an output current of the inverter circuit, an operating temperature of the inverter, or an operating humidity of the inverter meets a corresponding preset condition, the controller adjusts at least one of parameters including an operating frequency, an operating voltage, and an operating current of the inverter, to increase a loss of the inverter, so as to increase the operating temperature of the inverter or reduce the operating humidity of the inverter. Corresponding preset conditions are different: For the output power, the output power of the inverter circuit is lower than a preset power; for the output current, the output current of the inverter circuit is lower than a preset current; for the operating temperature, the operating temperature of the inverter is lower than a preset temperature; and for the operating humidity, the operating humidity of the inverter is higher than a preset humidity.

In the inverter provided in this embodiment, when any one of the foregoing preset conditions is met, the controller is triggered to act to increase the loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

Optionally, the inverter may be a two-stage inverter and includes not only the inverter circuit but also a boost circuit, where an input terminal of the boost circuit is connected to a direct current power supply, and an output terminal of the boost circuit is connected to an input terminal of the inverter circuit. The boost circuit is configured to boost a direct current from the direct current power supply at the input terminal of the boost circuit to a direct current at the output terminal of the boost circuit.

Optionally, the adjusting, by the controller, an operating frequency of the inverter is specifically: increasing a switching frequency of a semiconductor switching device in the boost circuit and/or the inverter circuit to increase the loss of the inverter, so as to increase the operating temperature of the inverter, thereby ensuring that the inverter can operate safely and reliably.

Optionally, the controller increases the switching frequency of the semiconductor switching device in the boost circuit to 150% or more of a rated switching frequency and/or the switching frequency of the semiconductor switching device in the inverter circuit to 150% or more of the rated switching frequency to increase the loss of the inverter, so as to increase the operating temperature of the inverter, thereby ensuring that the inverter can operate safely and reliably.

Optionally, the adjusting, by the controller, an operating voltage of the inverter is specifically: increasing a direct current bus voltage at the input terminal of the inverter circuit to increase the loss of the inverter, so as to increase the operating temperature of the inverter, thereby ensuring that the inverter can operate safely and reliably.

Optionally, the adjusting, by the controller, an operating current of the inverter is specifically: increasing a reactive current at an output terminal of the inverter circuit to increase the loss of the inverter, so as to increase the operating temperature of the inverter, thereby ensuring that the inverter can operate safely and reliably.

Optionally, when the output power of the inverter circuit is lower than the preset power or the output current of the inverter circuit is lower than the preset current, and the operating temperature of the inverter is lower than the preset temperature, the controller increases the loss of the inverter, so as to increase the operating temperature of the inverter, thereby improving power generation efficiency of a photovoltaic power generation system and ensuring that the inverter can operate safely and reliably.

Optionally, when the output power of the inverter circuit is lower than the preset power or the output current of the inverter circuit is lower than the preset current, and the operating humidity of the inverter is higher than the preset humidity, the controller increases the loss of the inverter, where an increase in the loss causes a temperature increase, so as to increase the operating temperature of the inverter and reduce the operating humidity of the inverter, thereby ensuring that the inverter can operate safely and reliably in a relatively high humidity environment.

Optionally, the preset power may be a currently maximum power of the direct current power supply. When the output power of the inverter is lower than the currently maximum power of the direct current power supply, the inverter is in an output-power-limited state. In this case, it is relatively difficult for the operating temperature of the inverter to reach a required temperature. Therefore, power consumption of the inverter can be increased by adjusting the parameter of the inverter, so as to increase the operating temperature of the inverter, thereby ensuring that the inverter can operate safely and reliably when operating in a limiting-output-power state.

According to a second aspect, an embodiment of this application provides a control method for an inverter, where the method includes: When at least one of an output power of an inverter circuit, an output current of the inverter circuit, an operating temperature of an inverter, or an operating humidity of an inverter meets a corresponding preset condition, adjusting at least one following parameter of the inverter to increase a loss of the inverter, so as to increase the operating temperature of the inverter or reduce the operating humidity of the inverter. The corresponding preset condition is as follows: The output power of the inverter circuit is lower than a preset power, the output current of the inverter circuit is lower than a preset current, the operating temperature of the inverter is lower than a preset temperature, or the operating humidity of the inverter is higher than a preset humidity; and the at least one parameter includes at least one of an operating frequency, an operating voltage, and an operating current.

When at least one of the following conditions is met: the output power of the inverter circuit is lower than the preset power, the output current of the inverter circuit is lower than the preset current, the operating temperature of the inverter is lower than the preset temperature, or the operating humidity of the inverter is higher than the preset humidity, the controller adjusts at least one of parameters including the operating frequency, the operating voltage, and the operating current of the inverter, to increase the loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

Optionally, the inverter further includes a boost circuit connected to an input terminal of the inverter circuit; and the adjusting the operating frequency of the inverter to increase the loss of the inverter specifically includes: increasing a switching frequency of a semiconductor switching device in the boost circuit and/or the inverter circuit to increase the loss of the inverter, so as to increase the operating temperature of the inverter, thereby ensuring that the inverter can operate safely and reliably.

Optionally, the adjusting the operating frequency of the inverter to increase the loss of the inverter specifically includes: increasing the switching frequency of the semiconductor switching device in the boost circuit and/or the inverter circuit to 150% or more of a rated switching frequency to increase the loss of the inverter, so as to increase the operating temperature of the inverter, thereby ensuring that the inverter can operate safely and reliably.

Optionally, the adjusting the operating voltage of the inverter to increase the loss of the inverter specifically includes: increasing a direct current bus voltage at the input terminal of the inverter circuit to increase the loss of the inverter, so as to increase the operating temperature of the inverter, thereby ensuring that the inverter can operate safely and reliably.

Optionally, the adjusting the operating current of the inverter to increase the loss of the inverter specifically includes: increasing a reactive current at an output terminal of the inverter circuit to increase the loss of the inverter, so as to increase the operating temperature of the inverter, thereby ensuring that the inverter can operate safely and reliably.

Optionally, when it is determined that the output power of the inverter circuit is lower than the preset power or the output current of the inverter circuit is lower than the preset current, and the operating temperature of the inverter is lower than the preset temperature, at least one of the parameters including the operating frequency, the operating voltage, and the operating current of the inverter is adjusted to increase the loss of the inverter, so as to increase the operating temperature of the inverter, thereby improving power generation efficiency of a photovoltaic power generation system and ensuring that the inverter can operate safely and reliably.

Optionally, when it is determined that the output power of the inverter circuit is lower than the preset power or the output current of the inverter circuit is lower than the preset current, and the operating humidity of the inverter is higher than the preset humidity, at least one of the parameters including the operating frequency, the operating voltage, and the operating current of the inverter is adjusted to increase the loss of the inverter, where an increase in the loss causes a temperature increase, so as to increase the operating temperature of the inverter and reduce the operating humidity of the inverter, thereby ensuring that the inverter can operate safely and reliably in a relatively high humidity environment.

Optionally, the preset power may be a currently maximum power of a direct current power supply. When the output power of the inverter is lower than the currently maximum power of the direct current power supply, the inverter is in an output-power-limited state. In this case, it is relatively difficult for the operating temperature of the inverter to reach a required temperature. Therefore, power consumption of the inverter can be increased by adjusting the parameter of the inverter, so as to increase the operating temperature of the inverter, thereby ensuring that the inverter can operate safely and reliably when operating in a limiting-output-power state.

According to a third aspect, an embodiment of this application provides an inverter system, including a direct current power supply and the inverter in any one of the foregoing aspects, where an input terminal of the inverter is connected to the direct current power supply.

The direct current power supply provides a direct current for the inverter, and an inverter circuit in the inverter converts the input direct current into an alternating current for output. When at least one of the following conditions is met: an output power of the inverter circuit is lower than a preset power, an output current of the inverter circuit is lower than a preset current, an operating temperature of the inverter is lower than a preset temperature, or an operating humidity of the inverter is higher than a preset humidity, a controller in the inverter adjusts at least one of parameters including an operating frequency, an operating voltage, and an operating current of the inverter, to increase a loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

Optionally, the direct current power supply is a photovoltaic module or a photovoltaic array.

According to the foregoing technical solutions, it can be learned that embodiments of this application have the following advantages:
The inverter provided in this embodiment of this application includes the inverter circuit and the controller. The inverter circuit can convert the direct current at the input terminal into the alternating current for output; and when at least one of the output power of the inverter circuit, the output current of the inverter circuit, the operating temperature of the inverter, or the operating humidity of the inverter meets the corresponding preset condition, the controller can adjust at least one of the parameters of the inverter to increase the loss of the inverter, so as to increase the operating temperature of the inverter or reduce the operating humidity of the inverter. The corresponding preset condition is as follows: The output power of the inverter circuit is lower than the preset power, the output current of the inverter circuit is lower than the preset current, the operating temperature of the inverter is lower than the preset temperature, or the operating humidity of the inverter is higher than the preset humidity; and the parameter of the inverter includes at least one of the operating frequency, the operating voltage, and the operating current.

The inverter provided in this embodiment of this application includes the inverter circuit and the controller. When at least one of the following conditions is met: the output power of the inverter circuit is lower than the preset power, the output current of the inverter circuit is lower than the preset current, the operating temperature of the inverter is lower than the preset temperature, or the operating humidity of the inverter is higher than the preset humidity, the controller adjusts at least one of the parameters including the operating frequency, the operating voltage, and the operating current of the inverter, to increase the loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

### BRIEF DESCRIPTION OF DRAWINGS

FIG. 1 is a schematic diagram of an inverter according to an embodiment of this application.
FIG. 2 is a schematic diagram of another inverter according to an embodiment of this application;
FIG. 3 is a schematic diagram of a switching frequency and an output power according to an embodiment of this application;
FIG. 4 is a schematic diagram of a relationship between an output power and an operating temperature according to an embodiment of this application;
FIG. 5 is a schematic diagram of a relationship between an output power and an operating humidity according to an embodiment of this application;
FIG. 6 is a flowchart of a control method for an inverter according to an embodiment of this application;
FIG. 7 is a flowchart of another control method for an inverter according to an embodiment of this application;
FIG. 8 is a flowchart of still another control method for an inverter according to an embodiment of this application;
FIG. 9 is a flowchart of yet another control method for an inverter according to an embodiment of this application;
FIG. 10 is a flowchart of still yet another control method for an inverter according to an embodiment of this application;
FIG. 11 is a flowchart of a further control method for an inverter according to an embodiment of this application; and
FIG. 12 is a schematic diagram of an inverter system according to an embodiment of this application.

### DESCRIPTION OF EMBODIMENTS

To enable a person skilled in the art to better understand the technical solutions provided in embodiments of this application, the following clearly and completely describes the technical solutions in embodiments of this application with reference to the accompanying drawings in embodiments of this application.

### Inverter Embodiment 1

This embodiment of this application provides an inverter. Without needing to add a heating apparatus, a loss of the inverter can be increased by adjusting a parameter of the inverter, so as to increase an operating temperature of the inverter, thereby ensuring that the inverter can operate safely and reliably.

The following describes embodiments of this application in detail with reference to accompanying drawings.

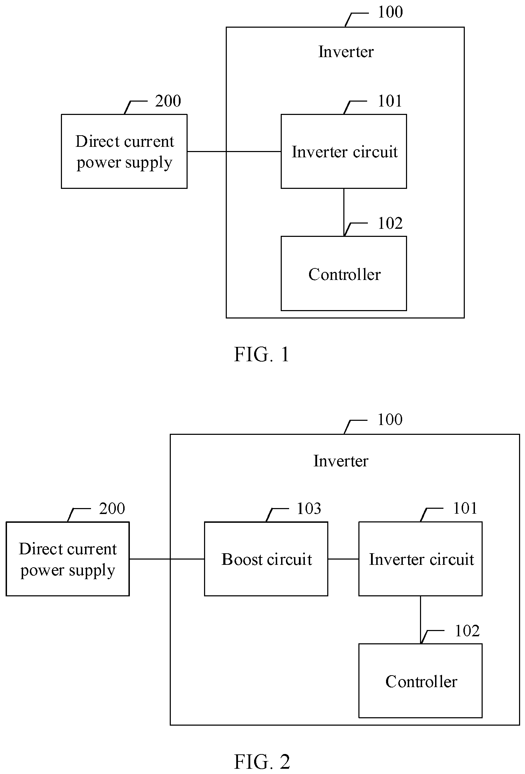

FIG. 1 is a schematic diagram of an inverter according to an embodiment of this application.

The inverter 100 includes an inverter circuit 101 and a controller 102.

An input terminal of the inverter circuit 101 is a direct current, and the inverter circuit 101 is configured to convert the direct current at the input terminal of the inverter circuit 101 into an alternating current. The alternating current output by the inverter circuit 101 may be used to supply power to a load, or may be transmitted to an alternating current power grid.

When the inverter 100 does not include a boost circuit, but includes only the inverter circuit 100, the input terminal of the inverter circuit 101 is an input terminal of the inverter 100, and an output terminal of the inverter circuit 101 is an output terminal of the inverter 100.

When the inverter 100 receives a direct current from a direct current power supply 200, the inverter circuit 101 inside the inverter 100 converts the direct current input from the direct current power supply 200 into an alternating current for output.

A type of the direct current power supply 200 is not specifically limited in this embodiment of this application. For example, the direct current power supply 200 may be a photovoltaic module, or may be a photovoltaic array formed by photovoltaic modules connected in series and parallel, or may be an energy storage unit, where the energy storage unit outputs a direct current.

When at least one of an output power of the inverter circuit 101, an output current of the inverter circuit 101, an operating temperature of the inverter 100, or an operating humidity of the inverter 100 meets a corresponding preset condition, the controller 102 adjusts at least one of parameters including an operating frequency, an operating voltage, and an operating current of the inverter 100 to increase a loss of the inverter 100, so as to increase the operating temperature of the inverter 100 or reduce the operating humidity of the inverter 100.

The corresponding preset condition is as follows: The output power of the inverter circuit 101 is lower than a preset power, the output current of the inverter circuit 101 is lower than a preset current, the operating temperature of the inverter 100 is lower than a preset temperature, or the operating humidity of the inverter 100 is higher than a preset humidity.

If any one of the foregoing preset conditions is met, the controller 102 adjusts the parameter of the inverter to increase the loss of the inverter, so as to increase the operating temperature of the inverter or reduce the operating humidity of the inverter.

A specific manner of obtaining the output power of the inverter circuit 101 is not specifically limited in this embodiment of this application. For example, the controller 102 obtains an output voltage and the output current of the inverter circuit 101, and then obtains the output power of the inverter circuit 101 based on the output voltage and the output current of the inverter circuit 101.

A specific manner of obtaining the output current of the inverter circuit 101, the operating temperature of the inverter 100, or the operating humidity of the inverter 100 is not specifically limited in this embodiment of this application. For example, after a current sensor detects the output current of the inverter circuit 101, a temperature sensor detects the operating temperature of the inverter, or a humidity sensor detects the operating humidity of the inverter, the obtained output current of the inverter circuit 101, the obtained operating temperature of the inverter 100, or the obtained operating humidity of the inverter 100 is sent to the controller 102.

The inverter provided in this embodiment of this application includes the inverter circuit and the controller. When at least one of the following conditions is met: the output power of the inverter circuit is lower than the preset power, the output current of the inverter circuit is lower than the preset current, the operating temperature of the inverter is lower than the preset temperature, or the operating humidity of the inverter is higher than the preset humidity, the controller adjusts at least one of the parameters including the operating frequency, the operating voltage, and the operating current of the inverter, to increase the loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

The foregoing describes an implementation in which the inverter does not include a boost circuit. The following describes an implementation in which the inverter 100 includes a boost circuit 103 and the inverter circuit 101 with reference to FIG. 2.

FIG. 2 is a schematic diagram of another inverter according to an embodiment of this application.

An input terminal of the boost circuit 103 is connected to the direct current power supply 200, and an output terminal of the boost circuit 103 is connected to the input terminal of the inverter circuit 101. The input terminal of the boost circuit 103 is an input terminal of the inverter 100, and the output terminal of the inverter circuit 101 is an output terminal of the inverter 100.

The boost circuit 103 is configured to boost a direct current from the direct current power supply 200 at the input terminal of the boost circuit 103 to a direct current at the output terminal of the boost circuit 103. To be specific, a direct current at the input terminal of the inverter circuit 101 comes from the output terminal of the boost circuit 103, rather than directly comes from the direct current power supply 200.

A specific structure of the boost circuit 103 is not specifically limited in this embodiment. For example, the boost circuit 103 may be a Boost circuit.

When the inverter 100 receives the direct current from the direct current power supply 200, the boost circuit 103 boosts the direct current from the direct current power supply 200 and then outputs a direct current to the inverter circuit 101, and the inverter circuit 101 converts the input direct current into an alternating current for output.

When at least one of the following conditions is met: the output power of the inverter circuit is lower than the preset power, the output current of the inverter circuit is lower than the preset current, the operating temperature of the inverter is lower than the preset temperature, or the operating humidity of the inverter is higher than the preset humidity, the controller adjusts the parameter of the inverter, to increase the loss of the inverter.

The preset power and the preset current are not specifically limited in this embodiment of this application. A person skilled in the art may set the preset power and the preset current based on an actual situation.

For example, the preset power may be a preset value. When the inverter 100 operates in a limiting-output-power state, the preset power may be a currently maximum power of the direct current power supply 200.

The following is described by using an example that the inverter operates in the limiting-output-power state.

When the output power of the inverter 100 is lower than the currently maximum power of the direct current power supply 200, the inverter 100 is in an output-power-limited state. In this case, it is relatively difficult for the operating temperature of the inverter 100 to reach a required temperature. Therefore, power consumption of the inverter 100 can be increased by adjusting the parameter of the inverter 100 to increase the operating temperature of the inverter 100, thereby ensuring that the inverter 100 can operate safely and reliably when operating in the limiting-output-power state.

A manner of obtaining the currently maximum power of the direct current power supply 200 is not specifically limited in this embodiment of this application. For example, the controller 102 detects an input voltage and an input current of the inverter 100, and then obtains the currently maximum power of the direct current power supply 200 based on the input voltage and the input current of the inverter 100.

### Inverter Embodiment 2

This embodiment describes a specific implementation of adjusting at least one of an operating frequency, an operating voltage, and an operating current of an inverter to increase a loss of the inverter.

That a controller adjusts a parameter of the inverter includes the following seven situations. Situation 1: The controller adjusts the operating frequency of the inverter alone. Situation 2: The controller adjusts the operating voltage of the inverter alone. Situation 3: The controller adjusts the operating current of the inverter alone. Situation 4: The controller simultaneously adjusts the operating frequency and the operating voltage of the inverter. Situation 5: The controller simultaneously adjusts the operating frequency and the operating current of the inverter. Situation 6: The controller simultaneously adjusts the operating voltage and the operating current of the inverter. Situation 7: The controller simultaneously adjusts the operating frequency, the operating voltage, and the operating current of the inverter.

The following uses the first three situations as examples for description. The last four situations can be obtained by combining the first three situations. Details are not described herein.

Situation 1: The operating frequency of the inverter is adjusted.

When an output power of an inverter circuit 101 is lower than a preset power or an output current of the inverter circuit 101 is lower than a preset current, a controller 102 adjusts an operating frequency of an inverter 100 to increase a loss of the inverter 100.

A manner of adjusting the operating frequency of the inverter 100 is not specifically limited in this embodiment of this application. For example, the operating frequency of the inverter 100 is adjusted by adjusting a switching frequency of a semiconductor switching device in the inverter 100.

How to adjust the switching frequency of the semiconductor switching device in the inverter 100 is not specifically limited in this embodiment of this application. For example, refer to FIG. 1. The controller 102 increases a switching frequency of a semiconductor switching device in the inverter circuit 101. For another example, refer to FIG. 2. The controller 102 increases a switching frequency of a semiconductor switching device in the boost circuit 103 to increase the loss of the inverter 100. For an inverter topology in FIG. 2, the controller 102 may also increase the switching frequency of the semiconductor switching device in the inverter circuit 101 and the switching frequency of the semiconductor switching device in the boost circuit 103 simultaneously.

A type of the inverter is not specifically limited in this embodiment of this application. However, when an operating temperature of the inverter is increased by increasing the switching frequency of the semiconductor switching device in the inverter, the type of the inverter cannot be a resonant inverter.

For example, when the inverter is a non-resonant inverter, if the inverter does not include a boost circuit, the controller can increase the loss of the inverter by increasing a switching frequency of a semiconductor switching device in an inverter circuit. If the inverter includes both a boost circuit and an inverter circuit, the controller can increase the loss of the inverter by increasing a switching frequency of a semiconductor switching device in the boost circuit and/or a switching frequency of a semiconductor switching device in the inverter circuit. As the switching frequency of the semiconductor switching device increases, a loss generated during a switching action of the semiconductor switching device increases, and losses of a related inductor and a related capacitor in the circuit also increase. The loss increase leads to an increase in the operating temperature of the inverter, thereby ensuring that the inverter can operate safely and reliably.

A value of the increased switching frequency of the semiconductor switching device is not specifically limited in this embodiment of this application. For example, the controller 102 increases the switching frequency of the semiconductor switching device to a preset switching frequency, so as to increase the operating temperature of the inverter 100, thereby ensuring that the inverter can operate safely and reliably.

The preset switching frequency is not specifically limited in this application. A person skilled in the art may set the preset switching frequency based on an actual situation.

For example, the controller 102 increases the switching frequency of the semiconductor switching device in the boost circuit 103 to 150% or more of a rated switching frequency, and/or the switching frequency of the semiconductor switching device in the inverter circuit 101 to 150% or more of the rated switching frequency, to increase the loss of the inverter 100.

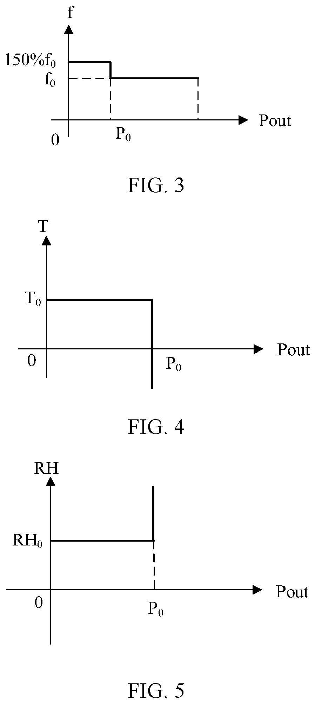

FIG. 3 is a schematic diagram of a switching frequency and an output power according to an embodiment of this application.

A horizontal axis Pout of a coordinate system represents the output power of the inverter circuit, and a vertical axis f represents the switching frequency of the semiconductor switching device in the inverter. P₀ represents the preset power, and f₀ represents the rated switching frequency.

When the output power Pout of the inverter circuit is lower than the preset power P₀, the controller increases the switching frequency of the semiconductor switching device to 150% or more of the rated switching frequency f₀ to increase the operating temperature of the inverter by increasing a switching loss of the semiconductor switching device.

When the output power of the inverter circuit is higher than the preset power, the controller reduces the switching frequency of the semiconductor switching device to the rated switching frequency, so as to reduce the switching loss of the semiconductor switching device.

Situation 2: The operating voltage of the inverter is adjusted.

When the output power of the inverter circuit 101 is lower than the preset power or the output current of the inverter circuit 101 is lower than the preset current, the controller 102 adjusts the operating voltage of the inverter to increase the loss of the inverter 100. For example, the controller 102 increases a direct current bus voltage at the input terminal of the inverter circuit 101.

A value of the direct current bus voltage at the input terminal of the inverter circuit 101 is not specifically limited in this embodiment of this application. For example, the controller 102 increases the direct current bus voltage at the input terminal of the inverter circuit 101 to the preset voltage, to increase the operating temperature of the inverter 100, thereby ensuring that the inverter can operate safely and reliably.

The preset voltage is not specifically limited in this embodiment of this application. A person skilled in the art may set the preset voltage based on an actual situation.

A manner in which the controller 102 adjusts the direct current bus voltage is not specifically limited in this embodiment of this application. For example, the controller 102 adjusts the direct current bus voltage by adjusting the inverter circuit 101. For another example, the controller adjusts the direct current bus voltage by adjusting the boost circuit 103.

When the direct current bus voltage at the input terminal of the inverter circuit is increased, the loss of the inverter is also increased. For example, when the direct current bus voltage is increased, losses of electrical components inside the inverter increase due to operating at a relatively high voltage. The electrical components include the semiconductor switching device and another component, where the another component is, for example, a capacitor or an inductor.

Because the loss of the inverter is increased, the operating temperature of the inverter is increased, thereby ensuring that the inverter can operate safely and reliably.

Situation 3: The operating current of the inverter is adjusted.

When the output power of the inverter circuit 101 is lower than the preset power or the output current of the inverter circuit 101 is lower than the preset current, the controller 102 adjusts the operating current of the inverter to increase the loss of the inverter 100. For example, the controller 102 increases a reactive current at the output terminal of the inverter circuit 101.

A value of the reactive current at the output terminal of the inverter circuit 101 is not specifically limited in this embodiment of this application. For example, the controller 102 increases the reactive current at the output terminal of the inverter circuit 101 to the preset current, to increase the operating temperature of the inverter 100, thereby ensuring that the inverter can operate safely and reliably.

The preset current is not specifically limited in this embodiment of this application. A person skilled in the art may set the preset current based on an actual situation.

When the reactive current at the output terminal of the inverter circuit is increased, the loss of the inverter is also increased. For example, when the reactive current at the output terminal of the inverter circuit is increased, losses of electrical components inside the inverter increase due to operating at a relatively high current. The electrical components include the semiconductor switching device and another component, where the another component is, for example, a capacitor or an inductor.

Because the loss of the inverter is increased, the operating temperature of the inverter is increased, thereby ensuring that the inverter can operate safely and reliably.

The inverter provided in this embodiment includes the inverter circuit and the controller. When the output power of the inverter circuit is lower than the preset power or the output current of the inverter circuit is lower than the preset current, the controller adjusts the parameter of the inverter to increase the loss of the inverter. Three manners of separately adjusting parameters of the inverter are used as examples. Manner 1: The operating frequency of the inverter is adjusted by increasing the switching frequency of the semiconductor switching device in the boost circuit and/or the inverter circuit. Manner 2: The operating voltage of the inverter is adjusted by increasing the direct current bus voltage at the input terminal of the inverter circuit. Manner 3: The operating current of the inverter is adjusted by increasing the reactive current at the output terminal of the inverter circuit. Because the loss of the inverter is increased, the operating temperature of the inverter is increased, thereby ensuring that the inverter can operate safely and reliably.

### Inverter Embodiment 3

This embodiment describes a specific implementation in which an inverter can operate safely and reliably in a low temperature environment and/or a high humidity environment.

The following separately describes the two situations.

Situation 1: The inverter operates in a low temperature environment.

A photovoltaic power generation system is generally placed outdoors. An outdoor temperature is generally low. When the inverter operates in the low temperature environment, the low temperature environment affects operating reliability of a component inside the inverter. For example, in the low temperature environment, the inverter may fail to start properly, or may fail to run properly after starting. Thus, power generation efficiency of the photovoltaic power generation system is reduced.

To improve the power generation efficiency of the photovoltaic power generation system and alleviate impact of the low temperature environment on operating reliability of the component inside the inverter, a temperature may be used as a determining condition to adjust a parameter of the inverter.

Specifically, when an output power of an inverter circuit 101 is lower than a preset power or an output current of the inverter circuit 101 is lower than a preset current, and an operating temperature of an inverter 100 is lower than a preset temperature, a controller 102 adjusts the parameter of the inverter 100 to increase a loss of the inverter 100, so as to increase the operating temperature of the inverter, thereby ensuring that the inverter can operate safely and reliably in the low temperature environment.

FIG. 4 is a schematic diagram of a relationship between both of an output power and an operating temperature and an adjustment action of a controller according to an embodiment of this application.

A horizontal axis Pout of a coordinate system represents the output power of the inverter circuit, and a vertical axis T represents the operating temperature of the inverter. P₀ represents the preset power, and T₀ represents the preset temperature.

It can be learned from FIG. 4 that when the output power Pout of the inverter circuit is lower than the preset power P₀, and the operating temperature T of the inverter is lower than the preset temperature T₀, the controller adjusts at least one of parameters including an operating frequency, an operating voltage, and an operating current of the inverter, to increase the loss of the inverter, so as to increase the operating temperature of the inverter, thereby ensuring that the inverter can operate safely and reliably in the low temperature environment.

A value of the preset temperature is not specifically limited in this embodiment of this application. A person skilled in the art may set the value of the preset temperature based on an actual situation.

For the controller adjusting the parameter of the inverter to increase the loss of the inverter, refer to the manner in the foregoing embodiment, and details are not described herein again.

Situation 2: The inverter operates in a high humidity environment.

A photovoltaic power generation system operates in an outdoor environment for a long time. Therefore, if an outdoor humidity is relatively high, operating reliability of a component inside the inverter is reduced. For example, there is a lot of water vapor in the high humidity environment. The water vapor penetrates inside the inverter; and thus a fault such as a short circuit occurs in the component inside the inverter, and reliability of the inverter is reduced.

To alleviate impact of the humid environment on operating reliability of the component inside the inverter, a humidity may be used as a determining condition to adjust the parameter of the inverter.

Specifically, when the output power of the inverter circuit 101 is lower than the preset power or the output current of the inverter circuit 101 is lower than the preset current, and the operating humidity of the inverter 100 is higher than the preset humidity, the controller 102 adjusts the parameter of the inverter to increase the loss of the inverter 100. An increase in the loss causes a temperature increase, so as to increase the operating temperature of the inverter and reduce the operating humidity of the inverter, thereby ensuring that the inverter can operate safely and reliably in a relatively high humidity environment.

In addition, when both the temperature and the humidity need to meet corresponding conditions, the parameter of the inverter may be adjusted by using the manner described in the foregoing embodiment, so as to increase the temperature and reduce the humidity.

FIG. 5 is a schematic diagram of a relationship between both of an output power and an operating humidity and an adjustment action of a controller according to an embodiment of this application.

A horizontal axis Pout of a coordinate system represents the output power of the inverter circuit, and a vertical axis RH represents the operating humidity of the inverter. P₀ represents the preset power, and RH₀ represents the preset humidity.

It can be learned from FIG. 5 that when the output power Pout of the inverter circuit is lower than the preset power P₀, and the operating humidity RH of the inverter is higher than the preset humidity RH₀, the controller adjusts at least one of parameters including an operating frequency, an operating voltage, and an operating current of the inverter, to increase the loss of the inverter, so as to increase the operating temperature of the inverter and reduce the operating humidity of the inverter, thereby ensuring that the inverter can operate safely and reliably in a high humidity environment.

A value of the preset humidity is not specifically limited in this embodiment of this application. A person skilled in the art may set the value of the preset humidity based on an actual need.

In the inverter provided in this embodiment, when the output power of the inverter circuit is lower than the preset power or the output current of the inverter circuit is lower than the preset current, and the operating temperature of the inverter is lower than the preset temperature, the controller adjusts the parameter of the inverter to increase the loss of the inverter, so as to increase the operating temperature of the inverter, thereby ensuring that the inverter can operate safely and reliably in the low temperature environment. Alternatively, when the output power of the inverter circuit is lower than the preset power or the output current of the inverter circuit is lower than the preset current, and the operating humidity of the inverter is higher than the preset humidity, the controller adjusts the parameter of the inverter to increase the loss of the inverter, so as to reduce the operating humidity of the inverter, thereby ensuring that the inverter can operate safely and reliably in a relatively high humidity environment.

### Method Embodiment 1

Based on the inverter provided in the foregoing embodiment, this application further provides a control method for an inverter. For a specific implementation of the inverter, refer to the foregoing embodiment. Details are not described herein in this embodiment.

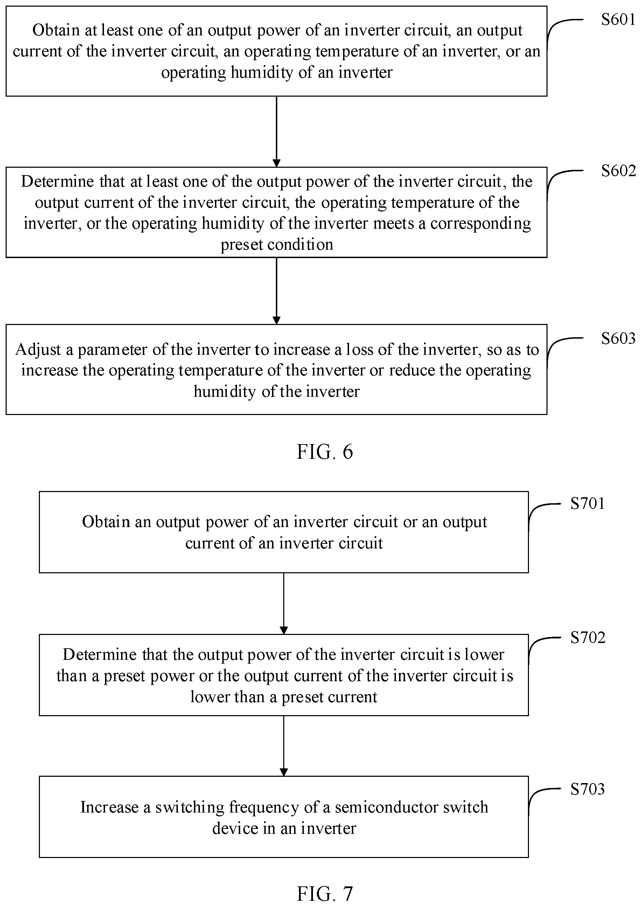

FIG. 6 is a flowchart of a control method for an inverter according to an embodiment of this application.

The control method for an inverter provided in this embodiment includes the following steps:
S601. Obtain at least one of an output power of an inverter circuit, an output current of the inverter circuit, an operating temperature of the inverter, or an operating humidity of the inverter. A specific manner of obtaining the output power of the inverter circuit or the output current of the inverter circuit is not specifically limited in this embodiment of this application. For example, a controller in the inverter detects the output current and an output voltage of the inverter circuit, and then obtains the output power of the inverter circuit based on the output current and the output voltage of the inverter circuit.
S602. Determine that at least one of the output power of the inverter circuit, the output current of the inverter circuit, the operating temperature of the inverter, or the operating humidity of the inverter meets a corresponding preset condition.

The corresponding preset condition is as follows: The output power of the inverter circuit is lower than a preset power, the output current of the inverter circuit is lower than a preset current, the operating temperature of the inverter is lower than a preset temperature, or the operating humidity of the inverter is higher than a preset humidity.

The preset power and the preset current are not specifically limited in this embodiment of this application. A person skilled in the art may set the preset power and the preset current based on an actual situation.

For example, the preset power may be a preset value. When the inverter operates in a limiting-output-power state, the preset power may be a currently maximum power of a direct current power supply.

The following is described by using an example that the inverter operates in a limiting-output-power state.

When the output power of the inverter is lower than the currently maximum power of the direct current power supply, the inverter is in an output-power-limited state. In this case, it is relatively difficult for the operating temperature of the inverter to reach a required temperature. Therefore, power consumption of the inverter can be increased by adjusting the parameter of the inverter, so as to increase the operating temperature of the inverter, thereby ensuring that the inverter can operate safely and reliably when operating in the limiting-output-power state.

A manner of obtaining the currently maximum power of the direct current power supply is not specifically limited in this embodiment of this application. For example, the controller detects an input voltage and an input current of the inverter, and then obtains the currently maximum power of the direct current power supply based on the input voltage and the input current of the inverter.

S603. Adjust at least one following parameter of the inverter to increase a loss of the inverter, so as to increase the operating temperature of the inverter or reduce the operating humidity of the inverter.

The at least one parameter includes at least one of an operating frequency, an operating voltage, and an operating current.

According to the control method provided in this embodiment, when at least one of the following conditions is met: the output power of the inverter circuit is lower than the preset power, the output current of the inverter circuit is lower than the preset current, the operating temperature of the inverter is lower than the preset temperature, or the operating humidity of the inverter is higher than the preset humidity, the controller adjusts at least one of the parameters including the operating frequency, the operating voltage, and the operating current of the inverter, to increase the loss of the inverter, so as to increase the operating temperature of the inverter or reduce the operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

### Method Embodiment 2

The following describes a specific implementation of adjusting a parameter of an inverter to increase an operating temperature of the inverter.

That a controller adjusts the parameter of the inverter includes the following seven situations:
Situation 1: The controller adjusts an operating frequency of the inverter alone.
Situation 2: The controller adjusts an operating voltage of the inverter alone.
Situation 3: The controller adjusts an operating current of the inverter alone.
Situation 4: The controller simultaneously adjusts the operating frequency and the operating voltage of the inverter.
Situation 5: The controller simultaneously adjusts the operating frequency and the operating current of the inverter.
Situation 6: The controller simultaneously adjusts the operating voltage and the operating current of the inverter.
Situation 7: The controller simultaneously adjusts the operating frequency, the operating voltage, and the operating current of the inverter.

The following uses the first three situations as examples for description. The last four situations can be obtained by combining the first three situations. Details are not described herein.

Situation 1: The operating frequency of the inverter is adjusted.

FIG. 7 is a flowchart of another control method for an inverter according to an embodiment of this application.

The control method for an inverter provided in this embodiment includes the following steps:
S701. Obtain an output power of an inverter circuit or an output current of an inverter circuit.
S702. Determine that the output power of the inverter circuit is lower than a preset power or the output current of the inverter circuit is lower than a preset current.
S703. Increase a switching frequency of a semiconductor switching device in the inverter.

A manner of adjusting the operating frequency of the inverter is not specifically limited in this embodiment of this application. For example, the operating frequency of the inverter is adjusted by adjusting the switching frequency of the semiconductor switching device in the inverter.

How to adjust the switching frequency of the semiconductor switching device in the inverter is not specifically limited in this embodiment of this application. For example, refer to FIG. 1. The controller 102 increases a switching frequency of a semiconductor switching device in the inverter circuit 101. For another example, refer to FIG. 2. The controller 102 increases a switching frequency of a semiconductor switching device in the boost circuit 103 to increase the loss of the inverter 100. For an inverter topology in FIG. 2, the controller 102 may also increase the switching frequency of the semiconductor switching device in the inverter circuit 101 and the switching frequency of the semiconductor switching device in the boost circuit 103 simultaneously.

A type of the inverter is not specifically limited in this embodiment of this application. However, when the operating temperature of the inverter is increased by increasing the switching frequency of the semiconductor switching device in the inverter, the type of the inverter cannot be a resonant inverter.

For example, when the inverter is a non-resonant inverter, if the inverter does not include a boost circuit, the controller can increase the loss of the inverter by increasing a switching frequency of a semiconductor switching device in the inverter circuit. If the inverter includes both a boost circuit and an inverter circuit, the controller can increase the loss of the inverter by increasing a switching frequency of a semiconductor switching device in the boost circuit and/or a switching frequency of a semiconductor switching device in the inverter circuit. As the switching frequency of the semiconductor switching device increases, a loss generated during a switching action of the semiconductor switching device increases, and losses of a related inductor and a related capacitor in the circuit also increase. The loss increase leads to an increase in the operating temperature of the inverter, thereby ensuring that the inverter can operate safely and reliably.

A value of the increased switching frequency of the semiconductor switching device is not limited in this embodiment of this application. For example, the controller increases the switching frequency of the semiconductor switching device to a preset switching frequency, so as to increase the operating temperature of the inverter 100, thereby ensuring that the inverter can operate safely and reliably.

The preset switching frequency is not specifically limited in this application. A person skilled in the art may set the preset switching frequency based on an actual situation.

For example, the controller 102 increases the switching frequency of the semiconductor switching device in the boost circuit 103 to 150% or more of a rated switching frequency, and/or the switching frequency of the semiconductor switching device in the inverter circuit 101 to 150% or more of the rated switching frequency, to increase the loss of the inverter 100.

Situation 2: The operating voltage of the inverter is adjusted.

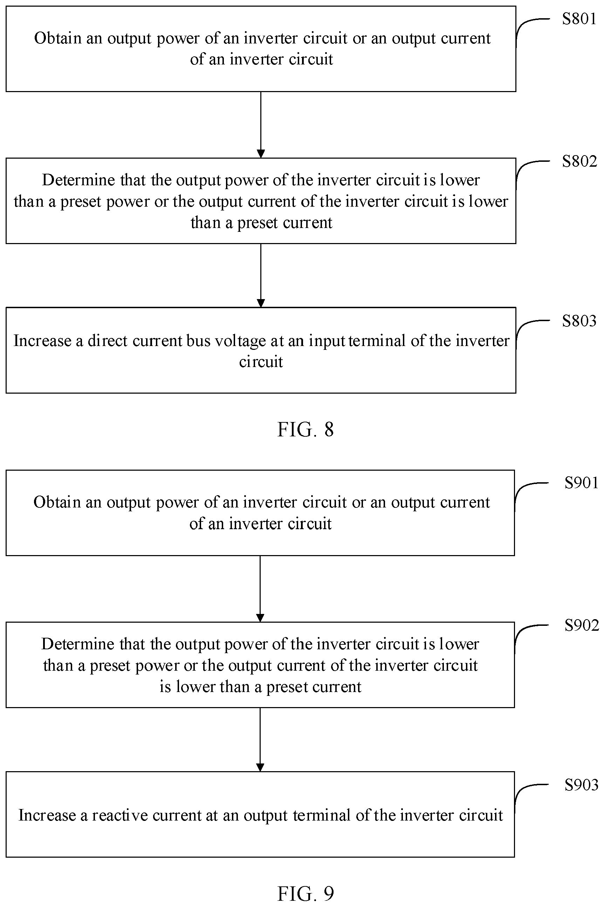

FIG. 8 is a flowchart of still another control method for an inverter according to an embodiment of this application.

The control method for an inverter provided in this embodiment includes the following steps:
S801. Obtain an output power of an inverter circuit or an output current of an inverter circuit.
S802. Determine that the output power of the inverter circuit is lower than a preset power or the output current of the inverter circuit is lower than a preset current.
S803. Increase a direct current bus voltage at an input terminal of the inverter circuit.

A value of the direct current bus voltage at the input terminal of the inverter circuit is not specifically limited in this embodiment of this application. For example, a controller increases the direct current bus voltage at the input terminal of the inverter circuit to the preset voltage, to increase an operating temperature of the inverter, thereby ensuring that the inverter can operate safely and reliably.

The preset voltage is not specifically limited in this embodiment of this application. A person skilled in the art may set the preset voltage based on an actual situation.

A manner in which the controller adjusts the direct current bus voltage is not specifically limited in this embodiment of this application. For example, the controller adjusts the direct current bus voltage by adjusting the inverter circuit. For another example, the controller adjusts the direct current bus voltage by adjusting a boost circuit.

When the direct current bus voltage at the input terminal of the inverter circuit is increased, the loss of the inverter is increased. For example, when the direct current bus voltage is increased, losses of electrical components inside the inverter increase due to operating at a relatively high voltage. The electrical components include a semiconductor switching device and another component, where the another component is, for example, a capacitor or an inductor.

Because the loss of the inverter is increased, the operating temperature of the inverter is increased, thereby ensuring that the inverter can operate safely and reliably.

Situation 3: The operating current of the inverter is adjusted.

FIG. 9 is a flowchart of yet another control method for an inverter according to an embodiment of this application.

The control method for an inverter provided in this embodiment includes the following steps:
S901. Obtain an output power of an inverter circuit or an output current of an inverter circuit.
S902. Determine that the output power of the inverter circuit is lower than a preset power or the output current of the inverter circuit is lower than a preset current.
S903. Increase a reactive current at an output terminal of the inverter circuit.

A value of the reactive current at the output terminal of the inverter circuit is not specifically limited in this embodiment of this application. For example, a controller increases the reactive current at the output terminal of the inverter circuit to the preset current, to increase an operating temperature of the inverter, thereby ensuring that the inverter can operate safely and reliably.

The preset current is not specifically limited in this embodiment of this application. A person skilled in the art may set the preset current based on an actual situation.

When the reactive current at the output terminal of the inverter circuit is increased, the loss of the inverter is increased. For example, when the reactive current at the output terminal of the inverter circuit is increased, losses of electrical components inside the inverter increase due to operating at a relatively high current. The electrical components include a semiconductor switching device and another component, where the another component is, for example, a capacitor or an inductor.

Because the loss of the inverter is increased, the operating temperature of the inverter is increased, thereby ensuring that the inverter can operate safely and reliably.

According to the control method provided in this embodiment, when the output power of the inverter circuit is lower than the preset power or the output current of the inverter circuit is lower than the preset current, the controller adjusts at least one of the parameters including the operating frequency, the operating voltage, and the operating current of the inverter to increase the loss of the inverter. By using separately adjusting the above parameters of the inverter as examples, three manners are included: Manner 1: The operating frequency of the inverter is adjusted by increasing the switching frequency of the semiconductor switching device in the boost circuit and/or the inverter circuit. Manner 2: The operating voltage of the inverter is adjusted by increasing the direct current bus voltage at the input terminal of the inverter circuit. Manner 3: The operating current of the inverter is adjusted by increasing the reactive current at the output terminal of the inverter circuit. Because the loss of the inverter is increased, the operating temperature of the inverter is increased, thereby ensuring that the inverter can operate safely and reliably.

### Method Embodiment 3

This embodiment describes a specific implementation in which an inverter can operate safely and reliably in a low temperature environment and/or a high humidity environment.

The following separately describes the two situations.

Situation 1: The inverter operates in a low temperature environment.

A photovoltaic power generation system is generally placed outdoors. An outdoor temperature is generally low. When the inverter operates in the low temperature environment, the low temperature environment affects operating reliability of a component inside the inverter. For example, in the low temperature environment, the inverter may fail to start properly, or may fail to run properly after starting. Thus, power generation efficiency of the photovoltaic power generation system is reduced.

To improve power generation efficiency of the photovoltaic power generation system and alleviate impact of the low temperature environment on operating reliability of the component inside the inverter, a temperature may be used as a determining condition to adjust a parameter of the inverter.

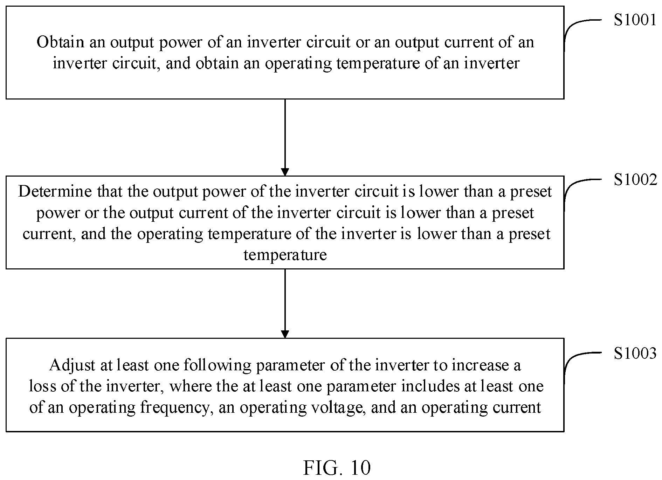

FIG. 10 is a flowchart of still yet another control method for an inverter according to an embodiment of this application.

The control method for an inverter provided in this embodiment includes the following steps:
S 1001 . Obtain an output power of an inverter circuit or an output current of an inverter circuit, and obtain an operating temperature of the inverter.

A manner of obtaining the operating temperature of the inverter is not specifically limited in this embodiment of this application. For example, the operating temperature of the inverter may be obtained by using a temperature sensor

S 1002. Determine that the output power of the inverter circuit is lower than a preset power or the output current of the inverter circuit is lower than a preset current, and the operating temperature of the inverter is lower than a preset temperature.

S1003. Adjust at least one following parameter of the inverter to increase a loss of the inverter, where the at least one parameter includes at least one of an operating frequency, an operating voltage, and an operating current.

Situation 2: The inverter operates in a high humidity environment.

A photovoltaic power generation system operates in an outdoor environment for a long time. Therefore, if an outdoor humidity is relatively high, operating reliability of a component inside the inverter is reduced. For example, there is a lot of water vapor in the high humidity environment. The water vapor penetrates inside the inverter; and thus a fault such as a short circuit occurs in the component inside the inverter, and reliability of the inverter is reduced.

To alleviate impact of the humid environment on operating reliability of the component inside the inverter, a humidity may be used as a determining condition to adjust a parameter of the inverter.

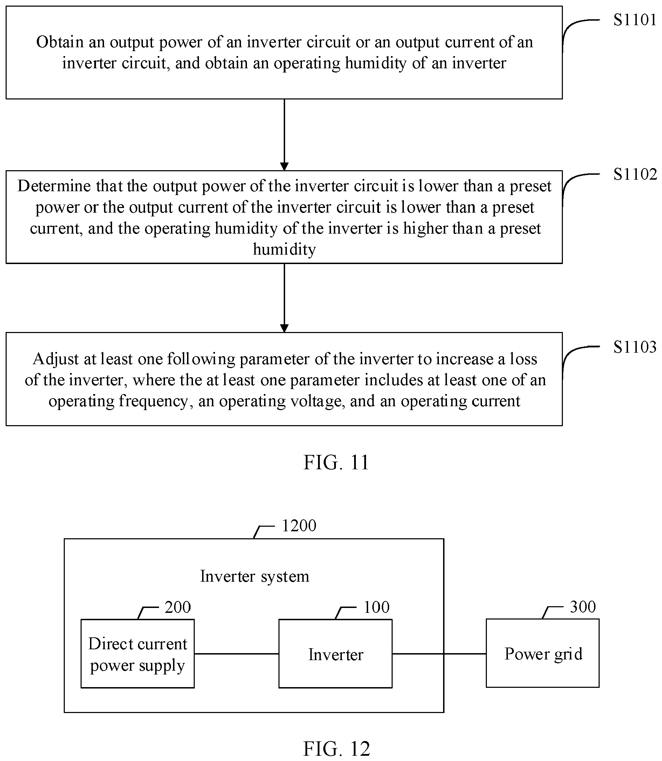

FIG. 11 is a flowchart of a further control method for an inverter according to an embodiment of this application.

The control method for an inverter provided in this embodiment includes the following steps:
S 1101 . Obtain an output power of an inverter circuit or an output current of an inverter circuit, and obtain an operating humidity of the inverter.

A manner of obtaining the operating humidity of the inverter is not specifically limited in this embodiment of this application. For example, the operating humidity of the inverter may be obtained by using a humidity sensor.

S 1102. Determine that the output power of the inverter circuit is lower than a preset power or the output current of the inverter circuit is lower than a preset current, and the operating humidity of the inverter is higher than a preset humidity.

S1103. Adjust at least one following parameter of the inverter to increase a loss of the inverter, where the at least one parameter includes at least one of an operating frequency, an operating voltage, and an operating current.

According to the control method provided in this embodiment, when the output power of the inverter circuit is lower than the preset power or the output current of the inverter circuit is lower than the preset current, and the operating temperature of the inverter is lower than the preset temperature, the controller adjusts the parameter of the inverter to increase the loss of the inverter, so as to increase the operating temperature of the inverter, thereby ensuring that the inverter can operate safely and reliably in the low temperature environment. Alternatively, when the output power of the inverter circuit is lower than the preset power or the output current of the inverter circuit is lower than the preset current, and the operating humidity of the inverter is higher than the preset humidity, the controller adjusts the parameter of the inverter to increase the loss of the inverter, so as to reduce the operating humidity of the inverter, thereby ensuring that the inverter can operate safely and reliably in a relatively high humidity environment.

### System Embodiment

Based on the inverter provided in the foregoing embodiments, an embodiment of this application further provides an inverter system, which is applied to the foregoing inverter.

FIG. 12 is a schematic diagram of an inverter system according to an embodiment of this application.

The inverter system 1200 includes the inverter 100 and the direct current power supply 200 that are provided in the foregoing embodiment, where an input terminal of the inverter 100 is connected to the direct current power supply 200, and the direct current power supply 200 provides a direct current for the inverter 100, so that the inverter 100 converts the direct current into an alternating current and outputs the alternating current to a power grid 300.

A type of the direct current power supply is not specifically limited in this application. For example, the direct current power supply may be a photovoltaic module, or may be a photovoltaic array formed by photovoltaic modules connected in series and/or parallel, or may be an energy storage unit, where the energy storage unit outputs a direct current.

The inverter system provided in this embodiment of this application includes the inverter and the direct current power supply. The direct current power supply provides a direct current for the inverter, and an inverter circuit in the inverter converts the input direct current into an alternating current for output. When at least one of the following conditions is met: an output power of the inverter circuit is lower than a preset power, an output current of the inverter circuit is lower than a preset current, an operating temperature of the inverter is lower than a preset temperature, or an operating humidity of the inverter is higher than a preset humidity, a controller in the inverter adjusts at least one of parameters including an operating frequency, an operating voltage, and an operating current of the inverter, to increase a loss of the inverter, so as to increase an operating temperature of the inverter or reduce an operating humidity of the inverter, thereby ensuring that the inverter can operate safely and reliably. In addition, the operating temperature of the inverter can be increased without adding an additional heating apparatus, which not only reduces costs of the inverter, but also does not need to change an original structure design of the inverter.

It should be understood that, in this application, "at least one (item)" means one or more, and "a plurality of" means two or more. The term "and/or" is used to describe an association relationship between associated objects, and indicates that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An inverter, comprising: an inverter circuit and a controller, wherein
the inverter circuit is configured to convert a direct current at an input terminal of the inverter circuit into an alternating current;
the controller is configured to: when at least one of an output power of the inverter circuit, an output current of the inverter circuit, an operating temperature of the inverter, or an operating humidity of the inverter meets a corresponding preset condition, adjust at least one following parameter of the inverter to increase a loss of the inverter to increase the operating temperature of the inverter or reduce the operating humidity of the inverter, wherein the corresponding preset condition is as follows: the output power of the inverter circuit is lower than a preset power, the output current of the inverter circuit is lower than a preset current, the operating temperature of the inverter is lower than a preset temperature, or the operating humidity of the inverter is higher than a preset humidity; and the at least one parameter comprises at least one of an operating frequency, an operating voltage, and an operating current.

2. The inverter according to claim 1, further comprising a boost circuit, wherein
an input terminal of the boost circuit is connected to a direct current power supply, and an output terminal of the boost circuit is connected to the input terminal of the inverter circuit; and
the boost circuit is configured to boost a direct current from the direct current power supply at the input terminal of the boost circuit to a direct current at the output terminal of the boost circuit.

3. The inverter according to claim 2, wherein the adjusting, by the controller, an operating frequency of the inverter is specifically: increasing a switching frequency of a semiconductor switching device in the boost circuit and/or the inverter circuit to increase the loss of the inverter.

4. The inverter according to claim 3, wherein the controller increases the switching frequency of the semiconductor switching device in the boost circuit and/or the inverter circuit to 150% or more of a rated switching frequency to increase the loss of the inverter.

5. The inverter according to claim 1, wherein the adjusting, by the controller, an operating voltage of the inverter is specifically: increasing a direct current bus voltage at the input terminal of the inverter circuit to increase the loss of the inverter.

6. The inverter according to claim 1, wherein the adjusting, by the controller, an operating current of the inverter is specifically: increasing a reactive current at an output terminal of the inverter circuit to increase the loss of the inverter.

7. The inverter according to any one of claims 1 to 6, wherein the controller is specifically configured to: when the output power of the inverter circuit is lower than the preset power or the output current of the inverter circuit is lower than the preset current, and the operating temperature of the inverter is lower than the preset temperature, increase the loss of the inverter.

8. The inverter according to any one of claims 1 to 6, wherein the controller is specifically configured to: when the output power of the inverter circuit is lower than the preset power or the output current of the inverter circuit is lower than the preset current, and the operating humidity of the inverter is higher than the preset humidity, increase the loss of the inverter.

9. The inverter according to any one of claims 1 to 6, wherein the preset power is a currently maximum power of the direct current power supply.

10. A control method for an inverter, wherein the inverter comprises an inverter circuit; the inverter circuit is configured to convert a direct current at an input terminal of the inverter circuit into an alternating current; and the method comprises:
when at least one of an output power of the inverter circuit, an output current of the inverter circuit, an operating temperature of the inverter, or an operating humidity of the inverter meets a corresponding preset condition, adjusting at least one following parameter of the inverter to increase a loss of the inverter to increase the operating temperature of the inverter or reduce the operating humidity of the inverter, wherein the corresponding preset condition is as follows: the output power of the inverter circuit is lower than a preset power, the output current of the inverter circuit is lower than a preset current, the operating temperature of the inverter is lower than a preset temperature, or the operating humidity of the inverter is higher than a preset humidity; and the at least one parameter comprises at least one of an operating frequency, an operating voltage, and an operating current.

11. The method according to claim 10, wherein the inverter further comprises a boost circuit connected to the input terminal of the inverter circuit; and
the adjusting the operating frequency of the inverter to increase the loss of the inverter specifically comprises:
increasing a switching frequency of a semiconductor switching device in the boost circuit and/or the inverter circuit to increase the loss of the inverter.

12. The method according to claim 11, wherein the adjusting the operating frequency of the inverter to increase the loss of the inverter specifically comprises: increasing the switching frequency of the semiconductor switching device in the boost circuit and/or the inverter circuit to 150% or more of a rated switching frequency to increase the loss of the inverter.

13. The method according to claim 10 or 11, wherein the adjusting the operating voltage of the inverter to increase the loss of the inverter specifically comprises:
increasing a direct current bus voltage at the input terminal of the inverter circuit to increase the loss of the inverter.

14. The method according to claim 10 or 11, wherein the adjusting the operating current of the inverter to increase the loss of the inverter specifically comprises:
increasing a reactive current at an output terminal of the inverter circuit to increase the loss of the inverter.

15. The method according to any one of claims 10 to 14, wherein the determining that the output power of the inverter circuit is lower than the preset power or the output current of the inverter circuit is lower than the preset current specifically further comprises:
determining that the output power of the inverter circuit is lower than the preset power or the output current of the inverter circuit is lower than the preset current, and the operating temperature of the inverter is lower than the preset temperature.

16. The method according to any one of claims 10 to 14, wherein the determining that the output power of the inverter circuit is lower than the preset power or the output current of the inverter circuit is lower than the preset current specifically further comprises:
determining that the output power of the inverter circuit is lower than the preset power or the output current of the inverter circuit is lower than the preset current, and the operating humidity of the inverter is higher than the preset humidity.

17. The method according to any one of claims 10 to 14, wherein the preset power is a currently maximum power of a direct current power supply.

18. An inverter system, comprising a direct current power supply and the inverter according to any one of claims 1 to 9, wherein
an input terminal of the inverter is connected to the direct current power supply.

19. The inverter system according to claim 18, wherein the direct current power supply is a photovoltaic module or a photovoltaic array.
